Europäisches Patentamt

European Patent Office

Office européen des brevets

(19)

(11) Numéro de publication: **0 051 026**
**A1**

## (12) DEMANDE DE BREVET EUROPEEN

(21) Numéro de dépôt: **81401663.0**

(22) Date de dépôt: **21.10.81**

(51) Int. Cl.³: **G 01 T 1/15**

(30) Priorité: **24.10.80 FR 8022814**
**23.03.81 FR 8105754**

(43) Date de publication de la demande:
**05.05.82 Bulletin 82/18**

(84) Etats contractants désignés:
**DE GB IT NL**

(71) Demandeur: **COMMISSARIAT A L'ENERGIE ATOMIQUE**
**Etablissement de Caractère Scientifique Technique et**
**Industriel**
**31/33, rue de la Fédération**
**F-75015 Paris(FR)**

(72) Inventeur: **Allemand, Robert**
**Chemin de Bouffière**
**F-38330 Saint Ismier(FR)**

(72) Inventeur: **Laval, Michel**
**17, Boulevard Maréchal Joffre**
**F-38000 Grenoble(FR)**

(72) Inventeur: **Parot, Pierre**
**162, Avenue Victor Hugo**
**F-38170 Seyssinet(FR)**

(74) Mandataire: **Mongrédien, André et al,**
**c/o Brevatome 25, rue de Ponthieu**
**F-75008 Paris(FR)**

(54) **Dispositif de calcul portatif permettant la mesure de rayonnements utilisant un détecteur à semiconducteur, et notamment à compensation électronique.**

(57) L'invention concerne un dispositif de calcul portatif permettant la mesure de rayonnements utilisant un détecteur à semiconducteur et à compensation électronique.

Ce dispositif comprend un détecteur à cristal semiconducteur (1) susceptible de délivrer des signaux électriques dont le spectre d'amplitude dépend de façon biunivoque du spectre d'énergie d'un rayonnement susceptible d'être reçu par le détecteur (1), des moyens d'amplification ($A_1$, $A_2$) du signal électrique issu du détecteur (1), des moyens électroniques de compensation (T.S, 25, 29, 31) dudit signal et des moyens d'affichage (27, 33, 17), reliés au moyen d'amplification et aux moyens de compensation, permettant d'afficher la dose de rayonnement reçue par le détecteur.

./...

FIG. 3

La présente invention concerne un dispositif de calcul portatif permettant la mesure de rayonnements utilisant un détecteur de rayonnements et à compensation électronique de l'hypersensibilité de ce détecteur aux rayonnements de faibles énergies ; ce détecteur est de préférence un détecteur à semiconducteur. La compensation électronique permet de mesurer de façon exacte la dose intégrée dans le temps du rayonnement. Ce dispositif permet une visualisation directe de la dose intégrée. De plus, ce dispositif portatif peut délivrer un signal d'alarme pour un débit de dose donné dudit rayonnement. Ce dispositif portatif s'applique en particulier dans le domaine de la radioprotection.

Dans certains postes de travail, par exemple dans des installations nucléaires, le personnel est soumis constamment à l'effet des rayonnements. Il en résulte qu'il est important de connaître avec précision, à la fin ou pendant chaque période de présence à ces postes de travail, la dose reçue par le personnel ainsi que la dose cumulée par exemple au cours d'un trimestre ou d'une année, afin de s'assurer du respect de la réglementation en vigueur dans ce domaine. Le personnel est donc amené à porter en permanence des dispositifs portatifs tels que des dosimètres individuels permettant de connaître la dose d'irradiation reçue au cours de certains travaux. Ces dispositifs portatifs peuvent aussi être utilisés en médecine nucléaire ou radiologique par les médecins ou les patients.

Il existe actuellement divers types de dispositifs portatifs à lecture directe parmi lesquels on distingue principalement :

  - les stylos dosimètres comprenant généra-

B 7252.3 LC

lement une chambre d'ionisation de faibles dimensions à laquelle est associé un électroscope et donnant la dose intégrée dans le temps avec une lecture directe analogique. En général, ce type de dosimètre ne délivre pas de signal d'alarme pour un débit de dose donné et en général la compensation de l'hypersensibilité du détecteur, ici la chambre d'ionisation, au rayonnement de faibles énergies est effectuée au moyen d'écrans, par exemple réalisés avec du graphite, d'un emploi délicat et limité et ne permettant de faire qu'une compensation grossière. Ces dosimètres sont de plus très sensibles aux chocs, ce qui entraîne des erreurs de mesures des doses reçues. De même, la plage de mesure est limitée ainsi que le nombre de graduations de l'échelle, ce qui rend la lecture délicate. Enfin, la recharge de la chambre après utilisation, c'est-à-dire la remise à zéro de celle-ci, est mal aisée et ne peut être faite que par un personnel spécialisé ;

- les compteurs de Geiger-Muller miniature, associés à une électronique de traitement qui délivre un signal sonore pour un débit de dose donné et donne la dose intégrée dans le temps avec une lecture directe. Dans ce type de dosimètre, la compensation en énergie est effectuée, comme pour les chambres d'ionisation, au moyen d'écrans tels que des écrans en étain et en plomb. De plus, ces dosimètres présentent une durée de vie réduite, liée à une usure des compteurs par pollution des gaz contenus dans lesdits compteurs au cours du temps. Enfin, leur fonctionnement nécessite l'utilisation d'une tension d'alimentation élevée, donc l'utilisation d'un convertisseur continu-continu.

L'invention a pour objet un dispositif de calcul portatif produit en grande série, tel que des

B 7252.3 LC

mini-calculatrices, sur lequel on adjoint une fonction "détection nucléaire" permettant la mesure de
rayonnements. Ce dispositif de calcul muni de sa
fonction "détection nucléaire" permet de remédier aux
inconvénients cités et permet notamment de compenser
plus simplement et plus complètement l'hypersensibilité du détecteur aux rayonnements de faibles énergies.

L'invention a donc pour objet un dispositif
de calcul portatif comportant de façon connue des
moyens d'addition d'informations numériques, des
moyens de détermination de périodes de temps et des
moyens d'affichage, caractérisé en ce qu'il comporte
également un détecteur nucléaire susceptible de délivrer des signaux électriques dont le spectre d'amplitude dépend de façon biunivoque du spectre d'énergie
du rayonnement dans lequel il est placé et des moyens
de conversion de ces signaux en informations numériques, les moyens d'addition recevant lesdites informations numériques, les moyens de détermination de
périodes de temps commandant lesdits moyens d'addition de manière à effectuer un calcul de la dose de
rayonnement reçue pendant une période de temps, dite
d'intégration, qui est affichée par lesdits moyens
d'affichage. Cette dose correspond à la dose de
rayonnement reçue par des tissus humains lorsque
ceux-ci sont situés près du détecteur.

Selon une caractéristique secondaire du
dispositif de calcul, celui-ci comporte des moyens
électroniques de compensation de la sensibilité du
détecteur en fonction de l'énergie du rayonnement de
façon à la rendre identique à celle des tissus humains, de telle sorte que le détecteur produise un
signal de sortie qui est dans un rapport constant
avec l'énergie dudit rayonnement pouvant être absorbée par des tissus humains.

B 7252.3 LC

Un détecteur dont la réponse est dans un rapport constant avec l'énergie absorbée par les tissus humains pour le rayonnement considéré est appelé un détecteur "équivalent tissu". Il est à noter que dans l'invention, le détecteur est rendu "équivalent tissu" grâce aux traitements électroniques des signaux qu'il fournit.

Selon un mode préféré de l'invention, le détecteur est un détecteur à cristal semiconducteur tel que par exemple le tellurure de cadmium ou le silicium.

Il est à noter qu'il a été proposé un certain nombre de dispositifs individuels comprenant un détecteur à semiconducteur du type tellurure de cadmium permettant uniquement de donner un signal d'alarme, indiquant la présence de rayonnement, donc un débit de dose, mais ne donnant aucun renseignement sur la dose intégrée du rayonnement et ne réalisant aucune compensation de l'hypersensibilité du détecteur aux rayonnements de faibles énergies.

Selon un autre mode préféré de l'invention, le dispositif portatif comprend en outre, un filtre nucléaire, constituant un écran absorbant.

D'autres caractéristiques et avantages de l'invention ressortiront mieux de la description qui va suivre, donnée à titre purement illustratif et non limitatif en référence aux figures annexées dans lesquelles :

- la figure 1 représente schématiquement un dispositif portatif selon l'invention ;

- la figure 2 représente schématiquement une première variante du circuit électronique du dispositif selon l'invention ;

- la figure 3 représente un schéma détaillé du circuit électronique de la figure 2 ;

B 7252.3 LC

- la figure 4 représente schématiquement une deuxième variante du circuit électronique du dispositif selon l'invention.

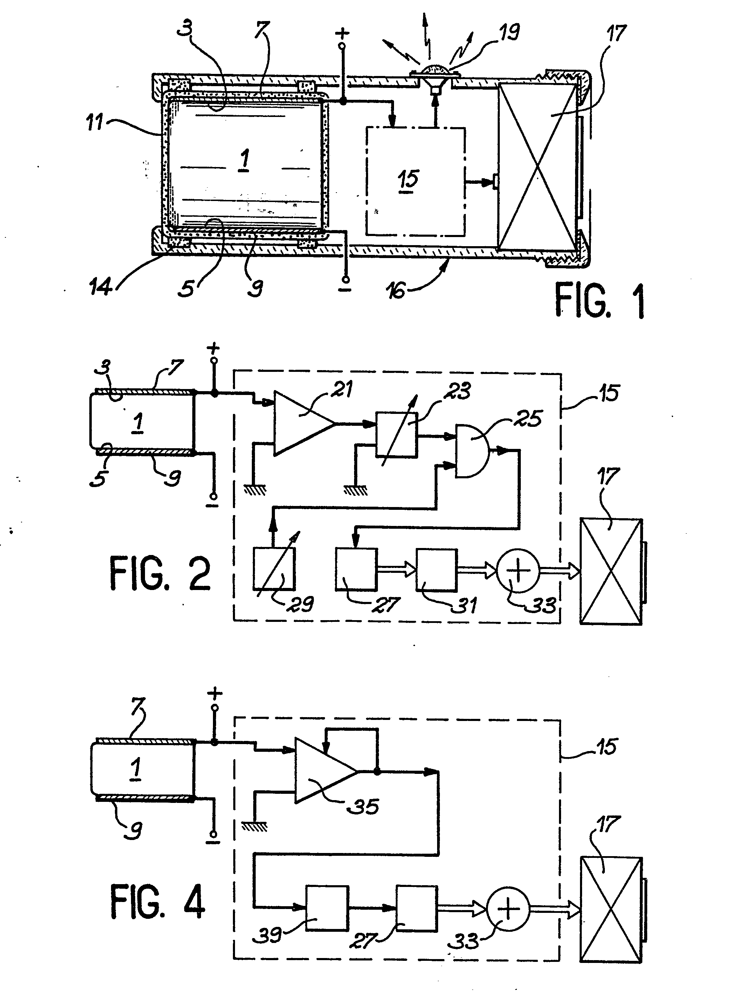

Selon l'invention le dispositif de calcul comprend une fonction "détection nucléaire" qui permet la mesure de rayonnements. Cette fonction est en faire réalisé au moyen d'un dispositif portatif du genre dosimètre individuel que l'on va tout d'abord décrire. Ce dispositif portatif du genre dosimètre individuel est schématisé sur la figure 1. Ce dispositif portatif comprend un détecteur par exemple à cristal semiconducteur 1 tel qu'un cristal de tellurure de cadmium ou de silicium fonctionnant à température ambiante. Sur les faces opposées 3 et 5 du détecteur à cristal 1 sont disposées deux électrodes métalliques 7 et 9 entre lesquelles est établie, au moyen d'une source d'alimentation une différence de potentiel de l'ordre de quelques volts. Le détecteur à semiconducteur 1 peut être associé à un jeu d'écrans absorbants 11, enveloppant le détecteur et réalisés en un matériau contenant de l'étain et du plomb, jouant le rôle de filtre nucléaire analogue à ceux utilisés avec les compteurs Geiger-Muller et servant de précompensation de l'énergie des rayonnements arrivant sur ce détecteur. Le fait d'envelopper entièrement le détecteur permet de rendre la réponse du détecteur isotrope, c'est-à-dire identique quel que soit le côté par lequel le rayonnement entre dans le détecteur. Des cales telles que 14 permettent de maintenir le détecteur à cristal 1 dans un boîtier 16 réalisé en un matériau léger n'absorbant pas les rayonnements tel qu'en matière plastique ou en aluminium.

Sous l'action d'un rayonnement la conductibilité induite dans le semiconducteur produit des

B 7252.3 LC

signaux électriques dont le spectre d'amplitude dépend de façon biunivoque du spectre d'énergie dudit rayonnement. Il est à noter que pour un rayonnement monoénergétique, le signal fourni par le détecteur ne sera pas unique, mais sera composé d'un spectre dont la forme sera unique et dont l'amplitude maximale sera proportionnelle à l'énergie du rayonnement détecté.

Le circuit électronique 15, associé au détecteur a pour rôle d'effectuer un traitement de ce signal de façon à le transformer en une ou plusieurs grandeurs directement utilisables par le personnel, telles que le débit de dose et la dose intégrée. Ces grandeurs sont affichées sur un afficheur à cristaux liquides par exemple 17. De plus, l'électronique 15 commande une alarme sonore 19, se déclenchant pour un seuil numérique donné de débit de dose ou de dose intégrée d'un rayonnement permettant ainsi d'indiquer la présence de rayonnements.

Avant de décrire l'électronique, associée au détecteur à cristal du dosimètre individuel représenté sur la figure 1, on va rappeler quelques éléments de physique de détection des rayonnements et en particulier de détection des rayonnements γ. On sait que le bombardement par un rayonnement γ d'un matériau permet d'obtenir l'émission de particules secondaires possédant une charge électrique. En particulier, ce bombardement permet d'obtenir l'effet photoélectrique (éjection d'un électron des couches K ou L d'un atome par perte de toute l'énergie du photon) ou l'effet Compton (choc entre un photon et un électron libre d'un atome au cours duquel l'électron éjecté ne reçoit qu'une partie de l'énergie du photon incident).

L'utilisation d'un matériau semiconducteur

B 7252.3 LC

présentant un nombre élevé d'électrons Z ou numéro atomique fait que le nombre d'interactions avec le matériau, pour un flux γ d'énergie donnée, va être beaucoup plus important si ce flux est faiblement énergétique. En effet, pour un flux d'énergie E inférieur à 250 KeV, le nombre d'interactions suit la loi de l'effet photoélectrique, c'est-à-dire, que le nombre d'interactions est proportionnel à $Z^5 . E^{-3,5}$, et pour un flux d'énergie E compris entre 250 keV et 1 MeV le nombre d'interactions suit la loi de l'effet Compton, c'est-à-dire que le nombre d'interactions est proportionnel à $Z E^{-1}$.

Pour des tissus humains, dont le nombre Z est beaucoup plus faible notamment que celui du tellurure de cadmium, la loi est très différente car l'effet photoélectrique est proportionnellement moins important que l'effet Compton. En conséquence, lorsque l'on utilise un détecteur à Z plus élevé que celui des tissus biologiques, il est nécessaire de diminuer l'hypersensibilité du détecteur pour des flux γ de basse énergie. La compensation électronique, que l'on associe au détecteur à semiconduteur, permet donc de modifier la courbe de sensibilité du détecteur à semiconducteur en fonction de l'énergie du rayonnement de façon à rendre ladite courbe de sensibilité plate, c'est-à-dire que le signal fourni par le dispositif de l'invention équipé de ce détecteur est proprotionnel à l'énergie absorbée par les tissus humains pour le rayonnement considéré.

Il est à noter que cette compensation électronique est possible car la réponse spectrale du détecteur par exemple à cristal semiconducteur tel que le tellurure de cadmium ou le silicium, est fonction biunivoque de l'énergie du rayonnement. Cette compensation ne peut être envisagée avec des dosimètres à Geiger-Muller puisque dans ce cas, l'amplitude des impulsions est indépendante de l'énergie initiale.

On a dit précédemment que le détecteur à semiconducteur pouvait être soit en tellurure de cadmium, soit en silicium. Il est à noter que le silicium présente sur le tellurure de cadmium l'avantage d'être plus proche d'une réponse "équivalent tissu" du fait que le numéro atomique du silicium est plus faible que celui du tellurure de cadmium, donc plus proche du numéro atomique moyen des tissus humains. En revanche, le silicium présente l'inconvénient de ne pouvoir être facilement réalisé que sous la forme de petites dimensions ($5x5$ $mm^2$ de surface sur $0,5$ mm d'épaisseur) ; ceci limite son utilisation à la détermination de débits de dose et de dose intégrée moyens ou forts, c'est-à-dire supérieurs à 10 mrd/h. Le tellurure de cadmium, bien que handicapé par une plus mauvaise réponse en énergie, a l'avantage de présenter une très bonne sensibilité, car il peut être réalisé sous la forme de dimensions plus importantes que celles du silicium ($5x5x5$ $mm^3$). Par ailleurs, son pouvoir d'arrêt des rayonnements est très nettement supérieur à celui du silicium car son numéro atomique et sa densité sont plus élevés que ceux du silicium.

Les figures 2, 3 et 4 représentent deux modes de réalisations des circuits électroniques associés au détecteur par exemple à cristal semiconducteur.

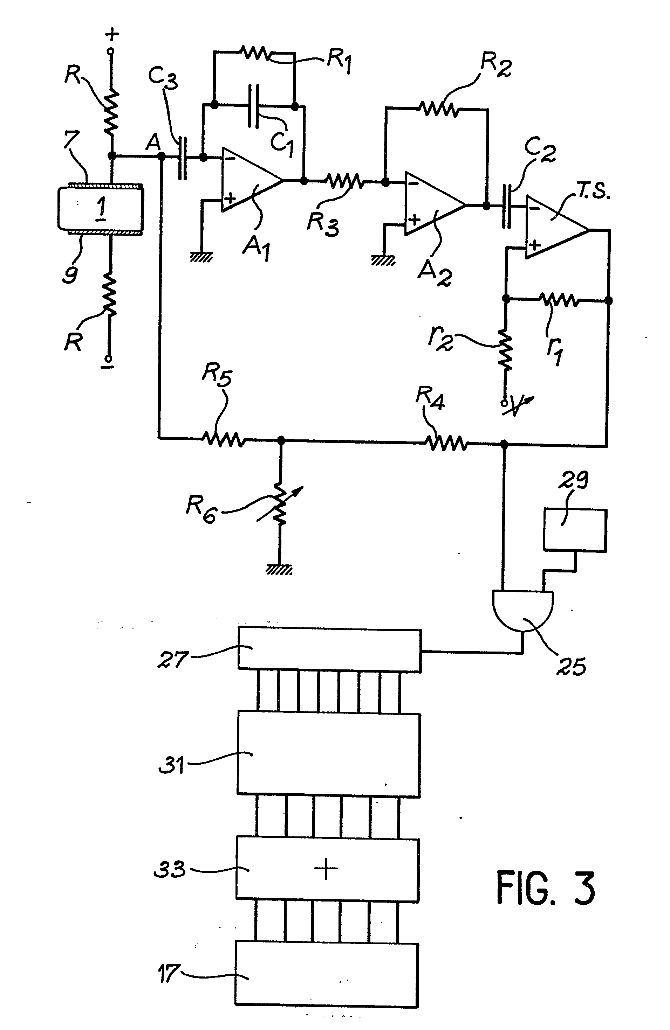

Dans le premier mode de réalisation, schématisé sur les figures 2 et 3, les moyens de traitement du signal issu du détecteur sont de type numérique. Sur la figure 3 représentant un schéma détaillé du circuit électronique, le détecteur 1 est relié à la source d'alimentation par l'intermédiaire de résistances R de forte valeur, c'est-à-dire de plusieurs dizaines de mégohms.

Le signal ou impulsion issu du détecteur 1, présentant une très faible amplitude, doit tout d'abord être amplifié au moyen d'une chaîne d'amplification telle que 21 avant d'être compensé selon l'invention. Cette chaîne d'amplification peut être constituée comme représenté sur la figure 3 par un amplificateur $A_1$ à bas bruit de fond, fonctionnant en préamplificateur de charge avec une capacité $C_1$ de 0,5 à 1 picofarad et une résistance $R_1$ telle que $R_1C_1$ soit compris entre 50 et 100 microsecondes et par un amplificateur $A_2$ monté en amplificateur de tension au moyen d'une résistance $R_2$, la sortie de l'amplificateur $A_1$ étant reliée à l'entrée négative de l'amplificateur $A_2$ au moyen d'une résistance $R_3$.

Dans ce mode de réalisation, les moyens de compensation électronique comprennent essentiellement un circuit de mise en forme 23 assurant une conversion amplitude-temps et parallèlement la fonction "seuil" par l'intermédiaire de deux résistances $r_1$ et $r_2$, afin d'éliminer les impulsions d'amplitude trop faible pour être prise en compte et notamment le bruit créé par le courant de fuite du détecteur à cristal 1. Ce circuit de mise en forme connecté à la sortie de l'amplificateur $A_2$ par l'intermédiaire d'une capacité $C_2$ peut être constitué par un circuit T.S. (figure 3) connu sous le nom de trigger de Schmidt et produit des signaux sous forme de créneaux servant à décharger la capacité $C_1$ du préamplificateur $A_1$.

La décharge de la capacité $C_1$ peut être réalisée au moyen d'une chaîne de contre-réaction constituée de deux résistances en série $R_4$ et $R_6$ montées en pont diviseur variable de façon à faire varier l'amplitude du signal fourni par le circuit de mise en forme 23, et d'une résistance $R_5$ de forte valeur, c'est-à-dire de plusieurs dizaines de mégohms. Cette résistance $R_5$ convertit la tension des créneaux fournis par le circuit de mise en forme 23 en un courant constant qui va servir à décharger la capacité $C_1$ de façon linéaire. La résistance $R_6$ permet donc de régler la valeur du courant de décharge de la capacité $C_1$, donc la durée $\Delta T$ de cette déchar- ge. Cette résistance $R_6$ est réglée de façon que la durée de décharge $\Delta T$ de la capacité $C_1$ soit courte vis-à-vis de la durée $R_1C_1$, c'est-à-dire que $\Delta T$ est voisin de $R_1C_1/3$, soit 10 à 13 microsecondes.

En résumé, lors de la détection d'un rayonnement, le détecteur fournit une quantité de charge Q qui va charger la capacité $C_1$ et donner à la sortie de l'amplificateur $A_1$ un échelon de tension $\Delta V$ égale à $Q/C_1$ que l'amplificateur $A_2$ va inverser et ampli- fier. Si l'amplitude de l'échelon de tension dépasse le seuil du circuit de mise en forme 23 qui est ré- glable ($x^7$), le circuit de mise en forme bascule et, par l'intermédiaire de la chaîne de contre-réaction $R_4$, $R_6$, $R_5$ décharge la capacité $C_1$ jusqu'à ce que le signal de sortie de l'amplificateur $A_2$ soit nul, à ce moment, le circuit de mise en forme 23 revient à son état initial, attendant une nouvelle impulsion.

La durée du créneau fournie par le circuit de mise en forme 23 est proportionnelle à l'énergie du rayonnement ionisant arrivant sur le détecteur à cristal 1. La chaîne de contre-réaction $R_4$, $R_6$, $R_5$ est connectée en un point A situé avant une capacité d'entrée $C_3$ reliant le détecteur 1 à l'entrée négati- ve du préamplificateur $A_1$. Le courant impulsionnel qui traverse la capacité $C_3$ présente alors une valeur moyenne nulle puisque cette dernière est traversée,

B 7252.3 LC

dans un sens par une quantité de charge Q fournie par le détecteur à cristal 1 et qui est stockée dans la capacité $C_1$, puis dans l'autre sens par une quantité de charge −Q fournie par la chaîne de contre-réaction. De ce fait, le potentiel moyen du point A est constant et ce quel que soit le signal de sortie du détecteur.

Dans l'exemple de réalisation décrit ci-dessus, la conversion en durée de l'amplitude des signaux sortant de la chaîne d'amplification 21 est linéaire, mais on peut envisager une conversion amplitude-temps non linéaire, suivant une loi préétablie permettant par exemple d'associer une durée plus faible pour les rayonnements de faible énergie que pour ceux d'énergie élevée.

Le signal issu du circuit de mise en forme 23 ouvre la porte 25 d'une échelle de comptage 27 qui compte les impulsions issues d'une horloge 29 à fréquence fixe par exemple de 1MHz.

A chaque détection d'une particule d'énergie supérieure à un certain seuil, on dispose d'une impulsion issue du circuit de mise en forme 23 dont la durée est liée à l'énergie des particules ionisantes arrivant sur le détecteur 1. On divise alors la durée des impulsions en une dizaine de classes 0 à 1μs, 1 à 2μs..., 9 à 10μs, en convertissant la durée des impulsions issues du circuit 23 en un nombre d'impulsions à l'aide de l'horloge 29 à fréquence fixe. L'échelle de comptage 27 fournit donc à chaque évènement détecté une adresse comprise par exemple entre 1 et 10 correspondant à 10 classes d'énergie croissante de 1 à 10. La compensation en énergie est alors assurée par une mémoire 31 telle qu'une mémoire programmable ou reprogrammable à lecture seule (PROM ou REPROM) qui attribue à chaque évènement, selon son

B 7252.3 LC

0051026

adresse, donc la classe dans laquelle il se trouve, une valeur prédéterminée (allant de 1 à 64 par exemple) de façon à appliquer un poids plus élevé à la classe la plus élevée (10) donc de donner plus de poids aux fortes énergies qu'aux faibles énergies, ce qui permet de compenser l'hypersensibilité du détecteur aux faibles énergies, les évènements trop nombreux détectés par le détecteur à basse énergie par rapport aux tissus humains étant compensés par l'attribution d'un poids plus faible que celui donné aux évènements de fortes énergies.

Le résultat, c'est-à-dire la dose intégrée reçue par le détecteur, consiste donc à additionner ces valeurs successives fournies par la mémoire 31, lors de chaque évènement détecté, au moyen d'un additionneur tel que 33. Le résultat final est alors affiché sur l'afficheur 17.

L'introduction de la mémoire 31 permet de réaliser de façon discrète, n'importe quelle loi de compensation de l'énergie des particules ionisantes ; ceci permet de s'adapter à n'importe quels volume et qualité du détecteur. En effet, le choix des poids à attribuer aux différentes énergies est fait avec le détecteur lui-même que l'on irradie, soit avec une pluralité de sources émettant des doses connues à chacune des énergies correspondant aux 10 classes retenues dans l'exemple de compensation, soit en utilisant une seule source à spectre large dite "blanche en dose", c'est-à-dire émettant un nombre de mrd/h/keV constant sur une gamme d'énergie correspondant à la gamme de réponse du dispositif de mesure (par exemple de 50 keV à 3 MeV).

Cette seconde solution plus difficile à mettre au point, car nécessitant la mise au point d'une source "blanche en dose", est cependant préfé-

B 7252.3 LC

rée à la première qui nécessite autant de sources que de classes d'énergie retenues pour la compensation, soit 10 dans l'exemple donné plus haut. Cette source blanche irradiant le détecteur, on mesure la distribution des amplitudes, c'est-à-dire la réponse spectrale du détecteur excité par cette source blanche. Pour cela on utilise un appareil connu sous le nom d'analyseur d'amplitude à multicanaux (comprenant au moins autant de canaux que de classes d'énergie) que l'on utilise sans son codeur d'amplitude. En effet, le dispositif de mesure précédemment décrit jusqu'à l'échelle de comptage 27 incluse, constitue un codeur d'amplitude comportant un nombre modeste de canaux (10 dans l'exemple décrit), chaque évènement étant codé en une adresse comprise entre 1 et 10.

On démontre alors que la distribution des amplitudes ainsi stockées par l'analyseur d'amplitudes est l'inverse de la courbe de compensation à mettre dans la mémoire 31. On peut donc ainsi calculer facilement les coefficients de pondération de chaque classe en calculant les inverses des contenus des 10 canaux obtenus précédemment et en adaptant les résultats à la capacité de la mémoire 31 : 1 à 64 ou 1 à 128 ou 1 à 1024 selon la précision souhaitée de la compensation.

Cet étalonnage permet donc de compenser exactement chaque détecteur de façon relativement simple pour l'homme de l'art. On peut envisager également des lois de compensation types correspondant à différentes tailles de détecteur, ceci introduira évidemment une certaine erreur qui sera d'autant plus faible que l'on aura maîtrisé la fabrication des détecteurs sur le plan de leur reproductibilité.

A la place de l'horloge à fréquence fixe, on peut utiliser une horloge à fréquence croissante, qui doit alors démarrer au moment où le circuit de mise en forme 23 bascule. Cette horloge délivre alors une séquence d'impulsion qui serait avantageusement de fréquence élevée pendant 6 impulsions par exemple, de fréquence moitié pendant 2 impulsions, puis de fréquence encore de moitié pendant 2 autres impulsions, dans l'exemple de 10 classes d'énergie. Ceci permet d'analyser ainsi plus finement la zone d'énergie comprise entre 50 et 300 keV, moyennement la zone d'énergie comprise entre 300 et 800 keV et grossièrement la zone d'énergie comprise entre 800 keV et 3 MeV. En effet, les différences de réponses entre le détecteur, notamment à tellurure de cadmium et les tissus humains sont importantes et rapidement variables dans les faibles énergies, et vont en diminuant vers les énergies élevées. Ceci permet donc de limiter le nombre de classes tout en ayant une analyse de l'énergie tout à fait satisfaisante.

Par ailleurs, on peut constater facilement, que ce procédé d'analyse réduit du même coup la dynamique de la compensation en énergie car les premières classes d'énergie étant plus étroites, celles-ci comporteront moins d'évènements et seront donc par le fait affectées d'une précompensation égale au rapport des fréquences d'horloge en fin et en début du cycle d'horloge. De même, les classes moyennes seront affectées d'une précompensation égale au rapport des fréquences en fin et en milieu de cycle d'horloge. En conséquence, dans l'exemple de séquence donné ci-dessus, on obtient un gain de 4 sur la dynamique de compensation. Il est évident que toutes les combinaisons de fréquences d'horloge et de nombre de classes ne sont pas limitées, l'exemple donné de 10 classes d'énergie ne l'est qu'à titre illustratif. La réalisation de telles séquences programmées est avec les

B 7252.3 LC

éléments technologiques en circuits intégrés, disponibles actuellement, très facile à réaliser pour l'homme de l'art.

Au moyen de compensation utilisant l'horloge à fréquence croissante, on peut associer le filtre nucléaire 11, jouant un rôle de précompensation. Ceci permet d'effectuer une compensation en énergie plus faible, donc meilleure.

Selon un autre mode de réalisation, les moyens d'amplification et de compensation du signal électrique issu du détecteur à cristal 1 sont de type analogique. De tels moyens sont représentés sur la figure 4. Dans ce mode de réalisation, les moyens d'amplification et de compensation comprennent un amplificateur à gain variable 35, c'est-à-dire qu'en fonction de l'amplitude du signal de sortie du détecteur, dépendant de l'énergie du rayonnement, on module le gain de l'amplificateur de façon à donner plus de poids aux fortes impulsions qu'aux faibles. La dose intégrée dans le temps peut être affichée, comme précédemment, sur l'afficheur 17 par l'intermédiaire de l'additionneur 33, de l'échelle de comptage 27 et d'un convertisseur analogique numérique 39 relié à l'amplificateur de gain 35.

Dans ce mode de réalisation, l'affichage de la dose intégrée peut se faire de façon analogique en remplaçant l'échelle de comptage 27 et le convertisseur analogique numérique 39 par un intégrateur donnant directement la dose intégrée dans le temps.

Bien entendu, tout autre mode de réalisation de compensation de l'énergie des rayonnements permettant de produire des signaux "équivalents tissus" peut être envisagé sans pour autant sortir du cadre de l'invention.

Les détecteurs à semiconducteur fonction- nant à température ambiante ont maintenant atteint un niveau technologique tel que leurs propriétés permettent de les utiliser en radioprotection, ces propriétés étant les suivantes :

- très faible encombrement (quelques millimètres cube),
- gamme d'énergie assez large (quelques 10 keV à 1 MeV),
- compensable électroniquement pour respecter les normes de dosimétrie,
- alimentation sous faible tension, compatible avec les tensions utilisées en micro-électronique.

Conformément à l'invention, on a adjoint, dans des dispositifs de calcul portatif tels que des mini-calculatrices ou dans des montres, une fonction "détection nucléaire" en plaçant dans le dispositif portatif un détecteur à semi-conducteur tel que le tellurure de cadmium ou le silicium et présentant les propriétés décrites ci-dessus. Pour connaître le débit de dose et éventuellement la dose intégrée d'un rayonnement, on utilisera, alors, certaines fonctions qui existent dans de tels dispositifs tels que l'affichage numérique, l'alarme sonore, l'intégration, le comptage, le chronomètre électronique, les registres d'attente..., en intercalant entre les circuits numériques correspondant à ces fonctions et le détecteur à semiconducteur un circuit intégré approprié.

En effet, l'affichage numérique pourra être utilisé pour afficher, le débit de dose, la dose, les points du spectre en énergie, etc..., l'intégration et le comptage permettront de calculer la dose intégrée, le chronomètre électronique permettra de calculer le débit de dose et les registres d'attente permettront de choisir des seuils d'alarme (présence de rayonnements).

B 7252.3 LC

Ces dispositifs portatifs fabriqués en grande série pourront être utilisés comme badges électroniques permettant d'avoir : les fonctions dosimètre à alarme sur seuil en débit de dose, les fonctions de calcul de dose intégrée facilement centralisable dans un système informatique direct de saisie d'informations numériques, les fonctions de lecture directe en débit de dose ou en dose intégrée.

Ces dispositifs portatifs munis de la fonction "détection nucléaire" s'appliquent dans les mêmes domaines que ceux utilisant un dosimètre individuel tel que décrit précédemment.

B 7252.3 LC

0051026

REVENDICATIONS

1. Dispositif de calcul portatif comportant de façon connue des moyens d'addition (33) d'informations numériques, des moyens (29) de détermination de périodes de temps et des moyens d'affichage (17), caractérisé en ce qu'il comporte également un détecteur nucléaire (1) apte à délivrer des signaux électriques dont le spectre d'amplitude dépend de façon biunivoque du spectre d'énergie du rayonnement dans lequel il est placé et des moyens de conversion (39) de ces signaux en informations numériques, les moyens d'addition (33) recevant lesdites informations numériques, les moyens (29) de détermination de périodes de temps commandant lesdits moyens d'addition de manière à effectuer un calcul de la dose de rayonnement nucléaire reçue pendant une période de temps, dite d'intégration, qui est affichée par lesdits moyens d'affichage (17).

2. Dispositif selon la revendication 1, caractérisé en ce que le détecteur nucléaire (1) est un détecteur à cristal semi-conducteur.

3. Dispositif selon la revendication 2, caractérisé en ce que le détecteur (1) à cristal semi-conducteur fonctionne à température ambiante.

4. Dispositif selon la revendication 3, caractérisé en ce que le cristal semi-conducteur est un cristal de tellurure de cadmium.

5. Dispositif selon la revendication 3, caractérisé en ce que le cristal semi-conducteur est un cristal de silicium.

6. Dispositif selon l'une quelconque des revendications 1 à 5, caractérisé en ce qu'il comporte des moyens électroniques de compensation (35) de

B 7252.3 LC

la sensibilité du détecteur (1) en fonction de l'énergie du rayonnement de façon à la rendre identique à celle des tissus humains de telle sorte que le détecteur produise un signal de sortie qui est dans un rapport constant avec l'énergie dudit rayonnement pouvant être absorbée par des tissus humains.

7. Dispositif selon l'une quelconque des revendications 1 à 6, caractérisé en ce que les moyens (29) de détermination de périodes de temps commandent les moyens d'addition (33) de manière à effectuer un calcul de la dose moyenne de rayonnement nucléaire pendant une période de temps, dite d'échantillonnage, autrement dit, le débit de dose, qui est affiché par les moyens d'affichage (17).

8. Dispositif selon l'une quelconque des revendications 1 à 7, caractérisé en ce qu'il comporte des moyens de détermination d'un seuil numérique, des moyens de comparaison de l'une des informations délivrée par les moyens d'addition (33) à ce seuil numérique et des moyens d'alarme (19) commandés par lesdits moyens de comparaison.

B 7252.3 LC

FIG. 1

FIG. 2

FIG. 4

FIG. 3

Office européen
des brevets

RAPPORT DE RECHERCHE EUROPEENNE

Numéro de la demande

EP 81 40 1663

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| | ELEKTRONIK, vol. 25, no. 12, décembre 1976, MUNICH (DE) H. GRUTER: "Taschenrechner als digital anzeigendes Strahlungsmess- gerät", pages 65 et 66 <br><br> * l'article en entier * <br> --- | 1 | G 01 T 1/15 |
| | US - A - 3 541 311 (R.A. TAYLOR) <br><br> * résumé; figure * <br> --- | 1 | |
| | NUCLEAR INSTRUMENTS AND METHODS, vol. 96, no. 2, octobre 1, 1971, AMSTERDAM (NL) M. SLAPA et al.: "Silicon pulse chamber for measurements of X and gamma dose rate", pages 239-245 <br><br> * page 239, colonne de gauche, lignes 22-40 * <br> --- | 2,5,6 | **DOMAINES TECHNIQUES RECHERCHES (Int. Cl. 3)** <br><br> G 01 T 1/15 <br> G 06 F 15/02 |
| | FR - A - 2 314 505 (LE MATERIEL TELEPHONIQUE) <br><br> * revendications 4 et 11 * <br> --- | 2-5,8 | |
| | MEASURMENT TECHNIQUES, vol. 18, no. 10, octobre 1975, NEW YORK (US) V.S. GOREV et al.: "Measurement of gamma-radiation exposure dose rate with an instrument incorporating a silicon detector", pages 1535-1536 <br><br> * page 1535, 3 dernières lignes à page 1536, ligne 7 * <br> --- <br> ./. | 2,6,7 | **CATEGORIE DES DOCUMENTS CITES** <br><br> X: particulièrement pertinent à lui seul <br> Y: particulièrement pertinent en combinaison avec un autre document de la même catégorie <br> A: arrière-plan technologique <br> O: divulgation non-écrite <br> P: document intercalaire <br> T: théorie ou principe à la base de l'invention <br> E: document de brevet antérieur, mais publié à la date de dépôt ou après cette date <br> D: cité dans la demande <br> L: cité pour d'autres raisons <br><br> &: membre de la même famille, document correspondant |

Le présent rapport de recherche a été établi pour toutes les revendications

| Lieu de la recherche | Date d'achèvement de la recherche | Examinateur |
|---|---|---|
| La Haye | 07.01.1982 | ARMSPACH |

OEB Form 1503.1  06.78

Office européen
des brevets

**RAPPORT DE RECHERCHE EUROPEENNE**

| Catégorie | Citation du document avec indication, en cas de besoin, des parties pertinentes | Revendication concernée |
|---|---|---|
| | US - A - 3 646 347 (B.J. FARMER et al.)<br><br>* figure 1 *<br><br>--------- | 6 |

**DOCUMENTS CONSIDERES COMME PERTINENTS**

**CLASSEMENT DE LA DEMANDE (Int. Cl. 3)**

**DOMAINES TECHNIQUES RECHERCHES (Int. Cl. 3)**

OEB Form 1503.2   06.78